(19) Europäisches Patentamt
European Patent Office
Office européen des brevets

(11) **EP 3 542 317 B1**

(12) **EUROPÄISCHE PATENTSCHRIFT**

(45) Veröffentlichungstag und Bekanntmachung des Hinweises auf die Patenterteilung:
**08.11.2023 Patentblatt 2023/45**

(21) Anmeldenummer: **17761492.2**

(22) Anmeldetag: **04.09.2017**

(51) Internationale Patentklassifikation (IPC):
**G06N 3/063** (2023.01)   **G06N 7/00** (2023.01)
**G05B 13/02** (2006.01)

(52) Gemeinsame Patentklassifikation (CPC):
**G06N 3/063; G05B 13/027;** G06N 7/01

(86) Internationale Anmeldenummer:
**PCT/EP2017/072051**

(87) Internationale Veröffentlichungsnummer:
**WO 2018/046422 (15.03.2018 Gazette 2018/11)**

(54) **MODELLBERECHNUNGSEINHEIT UND STEUERGERÄT ZUR WAHLWEISEN BERECHNUNG EINES RBF-MODELLS, EINES GAUSS-PROZESS-MODELLS UND EINES MLP-MODELLS**

MODEL-COMPUTATION-UNIT AND CONTROLLER FOR THE OPTIONAL CALCUALTION OF A RBF-MODEL, A GAUSSIAN-PROCESS-MODEL AND A MLP-MODEL

UNITÉ DE CALCUL-MODÈLE ET CONTRÔLEUR POUR LE CALCUL OPTIONNEL D'UN MODÈLE RBF, D'UN MODÈLE PROCESSUS GAUSSIEN ET D'UN MODÈLE MLP

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.09.2016 DE 102016216951**

(43) Veröffentlichungstag der Anmeldung:
**25.09.2019 Patentblatt 2019/39**

(73) Patentinhaber: **Robert Bosch GmbH**
**70442 Stuttgart (DE)**

(72) Erfinder:
• **MARKERT, Heiner**
  **70178 Stuttgart (DE)**
• **GUNTORO, Andre**
  **71263 Weil Der Stadt (DE)**
• **SCHIEGG, Martin**
  **70825 Korntal-Muenchingen (DE)**
• **KLOPPENBURG, Ernst**
  **71254 Ditzingen (DE)**

(56) Entgegenhaltungen:
• **EPPLER W ET AL: "High speed neural network chip for trigger purposes in high energy physics", DESIGN, AUTOMATION AND TEST IN EUROPE, 1998., PROCEEDINGS PARIS, FRANCE 23-26 FEB. 1998, LOS ALAMITOS, CA, USA,IEEE COMPUT. SOC, US, 23. Februar 1998 (1998-02-23), Seiten 108-115, XP010268412, DOI: 10.1109/DATE.1998.655844 ISBN: 978-0-8186-8359-6**
• **RICHARD FIIFI TURKSON ET AL: "Artificial neural network applications in the calibration of spark-ignition engines: An overview", ENGINEERING SCIENCE AND TECHNOLOGY, AN INTERNATIONAL JOURNAL, Bd. 19, Nr. 3, 16. April 2016 (2016-04-16) , Seiten 1346-1359, XP055420859, ISSN: 2215-0986, DOI: 10.1016/j.jestch.2016.03.003**
• **YILMAZ AHMET SERDAR ET AL: "Pitch angle control in wind turbines above the rated wind speed by multi-layer perceptron and radial basis function neural networks", EXPERT SYSTEMS WITH APPLICATIONS, Bd. 36, Nr. 6, 1. August 2009 (2009-08-01) , Seiten 9767-9775, XP029663195, ISSN: 0957-4174, DOI: 10.1016/J.ESWA.2009.02.014**

- - - -: "Introduction to Interpolated Neural Networks", APR Power White paper, 18. Januar 2009 (2009-01-18), Seiten 1-57, XP055420876, Gefunden im Internet: URL:http://www.aprpower.com/pdfs/APR Introduction to Interpolated Neural Networks_00.pdf [gefunden am 2017-11-01]

**Beschreibung**

Technisches Gebiet

Die Erfindung betrifft die Berechnung von Funktionsmodellen in einer separaten hartverdrahteten Modellberechnungseinheit, insbesondere zur Berechnung von mehrschichtigen Perzeptronenmodellen (MLP: Multilayer Perceptron) sowie RBF-Modellen (RBF: radiale Basisfunktion).

Technischer Hintergrund

Funktionen in Steuergeräten in Kraftfahrzeugen werden häufig mit Modellen realisiert, die ein mathematisches Abbild des realen Systems darstellen. Jedoch mangelt es bei physikalischen Modellen, insbesondere bei komplexen Zusammenhängen, an der erforderlichen Berechnungsgenauigkeit, und es ist bei heutigen Rechenkapazitäten in der Regel schwierig, derartige Modelle innerhalb der für ein Steuergerät geforderten Echtzeitanforderungen zu berechnen. Für solche Fälle ist angedacht, datenbasierte Modelle zu verwenden, die Zusammenhänge zwischen einer Ausgangsgröße und Eingangsgrößen ausschließlich auf der Basis von mit Hilfe eines Prüfstands oder dergleichen erhaltenen Trainingsdaten beschreiben. Insbesondere eignen sich datenbasierte Modelle zum Modellieren von komplexen Zusammenhängen, bei denen mehrere Eingangsgrößen, zwischen denen Wechselbeziehungen bestehen, in geeigneter Weise in dem Modell berücksichtigt werden. Zudem bietet die Modellierung mit Hilfe von datenbasierten Modellen die Möglichkeit, das Modell durch Hinzufügen von einzelnen Eingangsgrößen zu ergänzen.

Datenbasierte Funktionsmodelle basieren in der Regel auf einer großen Anzahl von Stützstellen, um eine für die jeweilige Anwendung ausreichende Modellierungsgenauigkeit zu erreichen. Aufgrund der hohen Anzahl der Stützstellen wird zur Berechnung eines Modellwertes mit einem datenbasierten Funktionsmodell, wie beispielsweise einem Gauß-Prozess-Modell oder einem mehrschichtigen Perzeptronenmodell, eine hohe Rechenkapazität benötigt. Um ein derartiges datenbasiertes Funktionsmodell in einer Steuergeräteanwendung in Echtzeit berechnen zu können, können daher auf einer Hardwareausgestaltung basierende Modellberechnungseinheiten vorgesehen sein. Das Dokument TURKSON ET AL., "Artificial neural network applications in the calibration of spark-ignition engines: An overview", ENGINEERING SCIENCE AND TECHNOLOGY, AN INTERNATIONAL JOURNAL, Bd. 19, Nr. 3, 16. April 2016, Seiten 1346-1359, beschreibt die Verwendung eines Steuergeräts mit einem Mikroprozessor und einer oder mehreren Modellberechnungseinheiten als ein Steuergerät zur Steuerung eines Motorsystems in einem Kraftfahrzeug und führt die Modelle RBF und mehrschichtiges Perzeptron auf. Das Dokument EPPLER ET AL., "High speed neural network chip for trigger purposes in high energy physics", DESIGN, AUTOMATION AND TEST IN EUROPE, PROCEEDINGS PARIS, FRANCE 23-26 FEB. 1998, LOS ALAMITOS, CA, USA, IEEE COMPUT. SOC, US, 23. Februar 1998, Seiten 108-115, beschreibt die wahlweise Berechnung des RBF-Modells oder der Neuronenschicht des mehrschichtigen Perzeptronenmodells.

Offenbarung der Erfindung

Die Erfindung ist in dem unabhängigen Anspruch 1 angegeben.

Weitere Ausgestaltungen sind in den abhängigen Ansprüchen angegeben.

Gemäß einem ersten Aspekt ist eine Modellberechnungseinheit zur wahlweisen Berechnung eines RBF-Modells oder einer Neuronenschicht eines mehrschichtigen Perzeptronenmodells mit einem in Hardware ausgebildeten fest verdrahteten Rechenkern zur Berechnung eines fest vorgegebenen Rechenalgorithmus in gekoppelten Funktionsblöcken vorgesehen. Der Rechenkern ist ausgebildet, um für ein RBF-Modell abhängig von einer oder mehreren Eingangsgrößen eines Eingangsgrößenvektors, von Stützstellenpunkten, von Längenskalen, von für jeden Stützstellenpunkt vorgegebenen Parametern eine Ausgangsgröße zu berechnen, wobei die Ausgangsgröße als eine Summe eines für jeden Stützstellenpunkt berechneten Werts gebildet wird, wobei insbesondere der Wert einem Peosukt aus einem dem betreffenden Stützstellenpunkt zugeordneten Parameter und einem Ergebnis einer Exponentialfunktion eines Werts ist, der sich aus dem durch die Längenskalen gewichteten quadratischen Abstand des betreffenden Stützstellenpunkts von dem Eingangsgrößenvektor ergibt. Der Rechenkern ist weiterhin ausgebildet, um für die Neuronenschicht des mehrschichtigen Perzeptronenmodells mit einer Anzahl von Neuronen abhängig von der einen oder den mehreren Eingangsgrößen des Eingangsgrößenvektors, von einer Gewichtungsmatrix mit Gewichtungsfaktoren und einen für jedes Neuron vorgegebenen Offsetwert eine Ausgangsgröße für jedes Neuron zu berechnen, wobei insbesondere für jedes Neuron der Neuronenschicht eine Summe der mit einem durch das Neuron und die Eingangsgröße bestimmten Gewichtungsfaktor gewichteten Werte der Eingangsgrößen und dem dem Neuron vorgegebenen Offsetwert berechnet wird und das Ergebnis mit einer Aktivierungsfunktion transformiert wird, um die Ausgangsgröße für das Neuron zu erhalten.

Eine Idee der obigen Modellberechnungseinheit besteht darin, diese mit einer Konfigurierbarkeit vorzusehen, die es ermöglicht, wahlweise ein RBF-Modell oder eine Neuronenschicht eines mehrschichtigen Perzeptronenmodells (MLP-Modells) mit einer variablen Anzahl von Neuronen zu berechnen.

Es kann vorgesehen sein, dass den Stützstellenpunkten und der Gewichtungsmatrix mit Gewichtungsfaktoren ein gemeinsamer Speicherbereich zugewiesen ist.

Weiterhin kann den für jeden Stützstellenpunkt vorgegebenen Parametern und den für jedes Neuron vorgegebenen Offsetwerten ein gemeinsamer Speicherbereich zugewiesen sein.

Der Rechenkern kann ausgebildet sein, um die Auswahl der Berechnung des RBF-Modells oder der Neuronenschicht des mehrschichtigen Perzeptronenmodells mithilfe einer Auswahlgröße durchzuführen.

Weiterhin kann der Rechenkern eine Zustandsmaschine, einen Speicher zum Speichern der einen oder mehreren Eingangsgrößen des Eingangsgrößenvektors, der Stützstellenpunkte, der Längenskalen, der für jeden Stützstellenpunkt vorgegebenen Parameter und der Ausgangsgröße, einen oder mehrere Rechenoperationsblöcke, insbesondere einen MAC-Block und einen Exponentialfunktion-Berechnungsblock, umfassen.

Insbesondere kann der Rechenkern ausgebildet sein, um abhängig von einer weiteren Auswahlgröße eine Art der Aktivierungsfunktion für das mehrschichtige Perzeptronenmodell auszuwählen und/oder die Berechnung eines Gaußprozesskerns durchzuführen.

Es kann vorgesehen sein, dass die Aktivierungsfunktionen eine Knickfunktion, eine Sigmoidfunktion, eine Tangens-Hyberbolicus-Funktion oder eine lineare Funktion umfasst.

Gemäß einer Ausführungsform kann der Rechenkern ausgebildet sein, um abhängig von einer RBF-Auswahlgröße die Verwendung von lokalen Längenskalen für die Berechnung des RBF-Modells vorzusehen.

Weiterhin kann der Rechenkern ausgebildet sein, um abhängig von einer Gradienten-Auswahlgröße die Berechnung von partiellen Ableitungen des RBF-Modells durchzuführen.

Gemäß einer Ausführungsform kann der Rechenkern in einem Flächenbereich eines integrierten Bausteins ausgebildet sein.

Gemäß der Erfindung ist ein Steuergerät mit einem Mikroprozessor und der obigen Modellberechnungseinheit versehen. insbesondere kann das Steuergerät als eine integrierte Schaltung ausgebildet sein.

Die Erfindung betrifft eine Verwendung des obigen Steuergeräts als ein Steuergerät zur Steuerung eines Motorsystems in einem Kraftfahrzeug.

Kurzbeschreibung der Zeichnungen

Ausführungsformen werden nachfolgend anhand der beigefügten Zeichnungen näher erläutert. Es zeigen:

Figur 1           eine schematische Darstellung eines Steuergeräts zum Einsatz für ein Motorsystem in einem Kraftfahrzeugs;

Figur 2           eine schematische Darstellung einer Berechnungseinheit als Teil des Steuergeräts;

Figur 3           eine schematische Darstellung einer Neuronenkonstellation eines RBF-Modells;

Figur 4           eine schematische Darstellung einer Neuronenschicht eines MLP-Modells; und

Figuren 5a-5d    Darstellungen von möglichen Aktivierungsfunktionen.

Beschreibung von Ausführungsformen

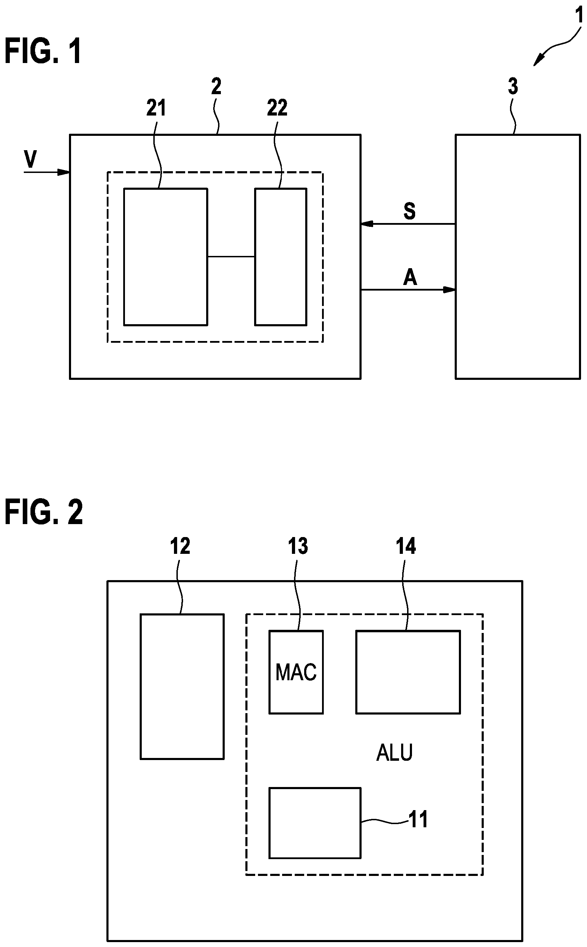

Figur 1 zeigt beispielhaft eine schematische Darstellung eines Steuergeräts 2 für ein Motorsystem 1 mit einem Verbrennungsmotor 3 als ein zu steuerndes technisches System. Das Steuergerät 2 umfasst einen Mikroprozessor 21 und eine Modellberechnungseinheit 22, die als separate Bauteile oder in integrierter Weise in separaten Flächenbereichen auf einem Chip ausgebildet sein können. Insbesondere stellt die Modellberechnungseinheit 22 eine Hardwareschaltung dar, die strukturell von einem Rechenkern des Mikroprozessors 21 getrennt sein kann.

Die Modellberechnungseinheit 22 ist im Wesentlichen hartverdrahtet und dementsprechend nicht wie der Mikroprozessor 21 dazu ausgebildet, einen Softwarecode auszuführen und dadurch eine variable durch Software vorgegebene Funktion auszuführen. Mit anderen Worten ist in der Modellberechnungseinheit 22 kein Prozessor vorgesehen, so dass diese nicht durch einen Softwarecode betreibbar ist. Durch die Fokussierung auf eine vorgegebene Modellfunktion wird eine ressourcenoptimierte Realisierung einer solchen Modellberechnungseinheit 22 ermöglicht. In integrierter Aufbauweise kann die Modellberechnungseinheit 22 flächenoptimiert realisiert werden, die zudem schnelle Berechnungen ermöglicht.

Das Steuergerät 2 dient im Wesentlichen dazu, Sensorsignale S bzw. Sensorgrößen, die von einer Sensorik in dem Verbrennungsmotor 3 erfasst werden, und/oder externe Vorgaben V zu verarbeiten und zyklisch in fest vorgegebenen Zeitabständen von z.B. 1 - 100ms oder Winkelsynchron in Abhängigkeit zu einem Kurbelwellenwinkel eines betriebenen Verbrennungsmotors, Werte von einer oder mehreren entsprechenden Ansteuergrößen A an den Verbrennungsmotor 3 anzulegen, so dass dieser in an sich bekannter Weise betreibbar ist.

In Figur 2 ist eine Modellberechnungseinheit 22 ausführlicher dargestellt. Die Modellberechnungseinheit 22 umfasst eine Zustandsmaschine 11, einen Speicher 12 und einen oder mehrere Operationsblöcke, die beispielsweise einen oder mehreren MAC-Blöcke 13 (MAC: Multiply-ACcumulate für Festkomma- oder Gleitkomma-Berechnungen) und einen Aktivierungsfunktion-Berechnungsblock (ACT) 14 zur Berechnung einer Aktivierungsfunktion. Die Zustandsmaschine 11 und der eine oder die mehreren Operationsblöcke 13, 14 bilden einen Rechenkern ALU der Modellberechnungseinheit 22. Die Operationsblöcke können zusätzlich oder alternativ zu dem MAC-Block einen Multiplizierblock und einen Additionsblock umfassen.

Mit Hilfe der Zustandsmaschine 11 können in einem Eingangsgrößenspeicherbereich des Speichers 12 abgelegte Werte von Eingangsgrößen durch wiederholte Schleifenberechnungen verrechnet werden, um Zwischengrößen bzw. Ausgangsgrößen zu erhalten, die in einen entsprechenden Ausgangsgrößenspeicherbereich des Speichers 12 geschrieben werden.

Die Zustandsmaschine 11 ist so ausgelegt, um ein RBF-Modell (RBF: Radiale Basisfunktion) zu berechnen.

Eine radiale Basisfunktion entspricht einer Funktion, deren Wert nur vom Abstand zum Ursprung abhängt, so dass die Funktion nach dieser Definition radialsymmetrisch ist und ferner diese Funktionen als Basisfunktionen einer Approximation verwendet werden.

Die Zustandsmaschine 11 kann anhand des nachfolgenden Pseudocodes beschrieben werden:

```
/* Eingangstransformation */
for (k=0; k<p7; k++) {
  ut[k] = u[k]*p1[k] + p2[k];
}

/* Schleifenberechnung */
for (j=p8; j<p6; j++) {
  i = j * p7;
  t = 0;
  for (k=0; k<p7; k++) {
    d = V[i+k] - ut[k];
    t += L[k] * d * d;
  }

y[0] += p3[j]*exp(-t);
}

/* Ausgangstransformation */
z[0] = y[0] * p4[0] + p5[0];
```

Mit

| | |
|---|---|
| p7: | maximaler Indexwert für die Eingangsgrößen des Eingangsgrößenvektors, gibt die Dimension des Eingangsgrößenvektors an |
| p8: | minimaler Indexwert (normalerweise Null, außer bei Unterbrechung und |
| Fort- | setzung der Rechnung) |
| p6: | maximaler Indexwert (Anzahl Stützpunkte) |
| p3: | Parameter des RBF-Modells |
| u: | Eingangsgrößen |
| ut: | transformierte Eingangsgrößen |
| L: | dimensionsweise Längenskalen |
| V: | Trainingspunkte bzw. Stützstellenpunkte |
| p1, p2: | Variablen für die Eingangstransformation für jede der Eingangsgrößen des Eingangsgrößenvektors |
| p4, p5: | Variablen für die Ausgangstransformation mit Dimension 1 (singleton). |

Mit Hilfe des obigen Pseudocodes lässt sich folgende Berechnung für das RBF-Modell durchführen:

$$y[0] = \sum_{j=0}^{p6-1} \left( p3[j] \cdot \exp\left( -\sum_{k=0}^{p7-1} L[k] \cdot (V[j,k] - ut[k])^2 \right) \right)$$

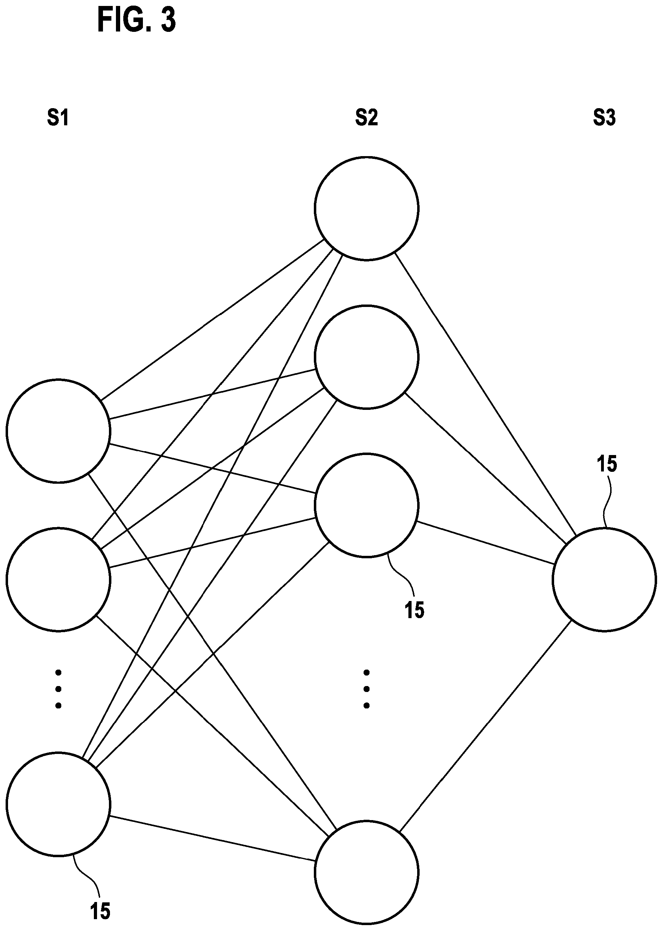

Die RBF-Funktion entspricht wie in Figur 3 grafisch dargestellt im Wesentlichen einer speziellen Form eines neuronalen Netzwerks mit drei Schichten, d.h. einer Eingangsschicht S1 mit p7 Neuronen 15 für einen Eingangsgrößenvektor mit p7 Eingangsgrößen, einer Zwischenschicht S2 mit einer Anzahl von p6 Neuronen 15, mit einer radialquadratischen Funktion als Aktivierungsfunktion und einer Ausgangsschicht S3 mit einem Neuron 15 und mit einer linearen Aktivierungsfunktion.

Es wird eine Eingangs- und/oder Ausgangstransformation der Eingangsgrößen des Eingangsgrößenvektors bzw. der Ausgangsgrößen des Ausgangsgrößenvektors mithilfe der für jedes Element des Eingangsgrößenvektors vorgegebenen Normierungsvariablen p1 und p2 bzw. für die Ausgangsgröße p4 und p5 vorgenommen werden.

Die Berechnung des RBF-Modells ermöglicht eine schlanke Ausgestaltung der Modellberechnungseinheit 22, so dass deren Flächenbedarf in integrierter Bauweise gering ist.

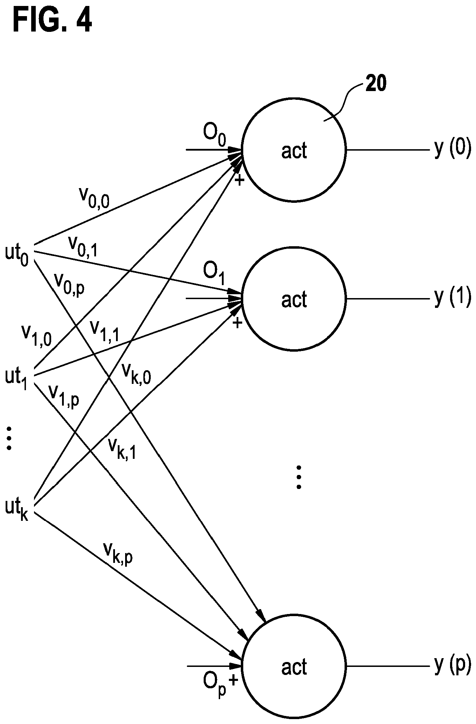

Die vorhandene Hardware wird zur allgemeinen Berechnung einer Neuronenschicht eines mehrschichtigen Perzeptronenmodells wie folgt modifiziert. Dazu zeigt Figur 4 eine Neuronenschicht von mehreren Neuronen 20, denen Werte von Eingangsgrößen eines Eingangsgrößenvektors $ut_0 \ldots ut_k$ (mit k=p7-1) zugeführt werden. Die Werte der Eingangsgrößen werden mit Hilfe einer entsprechenden vorgegebenen Gewichtungsmatrix aus Gewichtungsfaktoren $v_{0 \ldots p, 0 \ldots k}$ (mit p=p6-1) gewichtet. Die Gewichtung erfolgt in der Regel durch multiplikatives Beaufschlagen mit den zugeordneten Gewichtungsfaktoren $v_{0 \ldots p7-1, 0 \ldots p6}$-1. Die Größe p6 entspricht der Anzahl von Neuronen 20 und die Größe p7 der Anzahl der Eingangsgrößen.

Das Ergebnis der Summe der gewichteten Werte des Eingangsgrößenvektors $ut_0 \ldots ut_{p7-1}$ wird mit einem Offsetwert $O_0 \ldots O_{p6-1}$ (entspricht p3[0] ... p3[p6-1]) beaufschlagt, insbesondere additiv beaufschlagt. Das Ergebnis wird mit einer vorgegebenen Aktivierungsfunktion "act" transformiert. Als Ergebnis erhält man einen entsprechenden Wert eines Ausgangsgrößenvektors $y_0 \ldots y_{p6-1}$. Durch das Vorsehen des Offsetwerts $O_0 \ldots O_{p6-1}$ für jedes Neuron 20 besteht ein weiterer Freiheitsgrad für die Modellbildung.

$$y[j] = act\left(O[j] + \sum_{k=0}^{p7-1} v_{j,k} * ut[k]\right) \text{ für j=0...p6-1}$$

Durch Festlegen der Laufvariablen p6 kann die Anzahl der Neuronen 20 der zu berechnenden Neuronenschicht eingestellt werden. Ein mehrschichtiges Perzeptronenmodell kann durch Verwenden der Werte des Ausgangsgrößenvektors $y_0 \ldots y_{p6-1}$, einer Neuronenschicht als Eingangsgrößenvektor für eine Berechnung einer nachfolgenden Neuronenschicht in der Modellberechnungseinheit 22 verwendet werden, so dass die Anzahl der Neuronenschichten des mehrschichtigen Perzeptronenmodells durch wiederholtes Aufrufen der Funktion gemäß dem obigen Pseudocode bzw. durch wiederholtes Aufrufen der Modellberechnungseinheit 22 mit entsprechend geänderten Parametern realisiert werden kann.

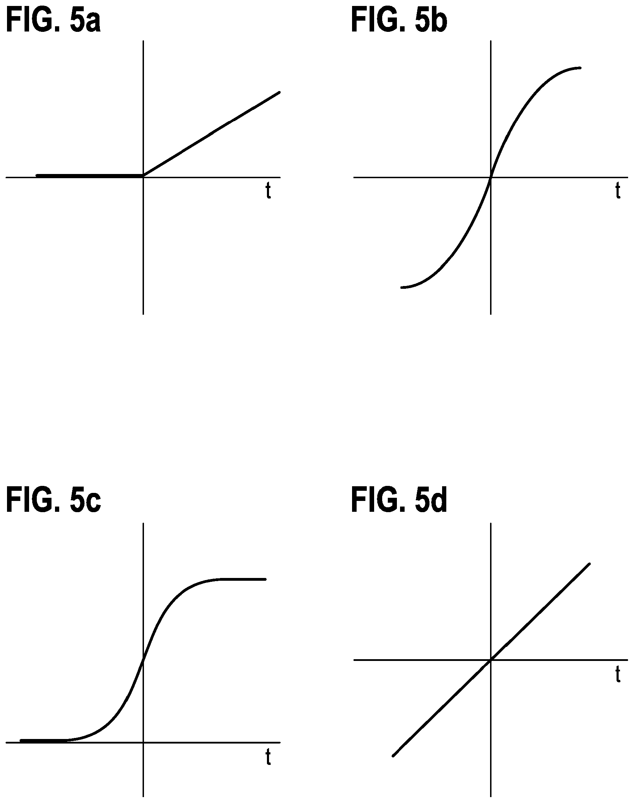

Als Aktivierungsfunktion "act" kann bei der Berechnung des Perzeptronenmodells eine von mehreren Aktivierungsfunktionen zur Verfügung gestellt werden, die durch den Aktivierungsfunktion-Berechnungsblock 14 der Modellberechnungseinheit 22 berechnet werden kann. Als Aktivierungsfunktionen act können beispielsweise eine Knickfunktion, eine Tangens-Hyberbolicus-Funktion, eine Sigmoidfunktion oder eine lineare Funktion verwendet werden, wie sie in den Figuren 5a bis 5d entsprechend dargestellt sind.

Nachfolgend ist ein Pseudocode für die Zustandsmaschine 11 dargestellt, der alternativ das RBF-Modell oder eine Neuronenschicht eines Perzeptronenmodells berechnet.

```
flag_clr_y = cfg_autoclear_y;

/* Eingangstransformation */
for (k=0; k<p7; k++) {
  ut[k] = u[k]*p1[k] + p2[k];
}

/* Schleifenberechnung */
for (j=p8; j<p6; j++) {
  i = j * p7;
  t = (cfg_mlp) ? p3[j] : 0.0f; // Initialisierung für MLP-Berechnung
  for (k=0; k<p7; k++) {
    if (cfg_mlp) {
      t += V[i+k] * ut[k];
    }


    else {
      d = V[i+k] - ut[k];
      n = (cfg_rbf_local) ? i+k : k;
      f = L[n] * d;
      t += f * d;
      // Speichern von Zwischenwerten für Ermittlung von Teilableitungen
      if (cfg_pd) ud[k] = f;
    }
  }
  if (cfg_mlp) {
    switch (cfg_activation_function) {
    case 1:
      e = (t>=0.0f) ? t : 0.0f; // Knickfunktion
      break;
    case 2:  // Sigmoid-Funktion
      e = sigmoid(t);
      break;
    case 3: // tanh-Funktion
      e =  tanh(t);
      break;
    default: // lineare Funktion
      e = t;
    }
    y[j] = e;
  }
  else { // für Gaussprozessmodell/RBF-Modell
    e = exp(-t);

    if (flag_clr_y)
      for (n=0; n<p9; n++) y[n] = 0.0f; /* für Nicht-MLP , p9 definiert die Länge */

    q = p3[j] * e;
    y[0] += q;
    if (cfg_pd)
      for (n=1, k=p10; n<p9; n++,k++) y[n] += q * ud[n];
    /* clear flag */
    flag_clr_y = false;
  }

  /* Ausgangstransformation */
  j = (cfg_mlp) ? p6 : p9;
  for (k=0; k<j; k++) {
    z[k] = y[k] * p4[k] + p5[k];
  }
```

Durch die durch den obigen Pseudocode definierte Hardwareausbildung ist es möglich, neben einer Neuronenschicht eines mehrschichtigen Perzeptronenmodells auch ein Gauß-Prozess-Modell bzw. ein RBF-Modell (RBF: Radiale Basisfunktion) zu berechnen.

Man erkennt, dass bei der Durchführung der Schleifenfunktion durch die Variable cfg_mlp eine Fallunterscheidung durchgeführt werden kann. Bei cfg_mlp=1 wird die Berechnung der Neuronenschicht gewählt und es kann mit cfg_activation_function=0...3 die Art der oben beschriebenen Aktivierungsfunktionen ausgewählt werden. Bei cfg_mlp=0 wird ein Gaußprozessmodell oder ein RBF-Modell berechnet. Hier ist eine Auswahl der Aktivierungsfunktion nicht notwendig, da diese stets mit der Exponentialfunktion gerechnet werden. Auf diese Weise ist es möglich, die Modellberechnungseinheit 22 sowohl für die Berechnung von Gauß-Prozess-Modellen und RBF-Modellen als auch für die Berechnung einer Neuronenschicht eines MLP-Modells zu verwenden und dabei einen nur geringen Flächenbedarf in integrierter Bauweise der Zustandsmaschine zu benötigen.

Weiterhin kann je nach ausgewählter Berechnung als Ergebnis ein Vektor oder ein Einzelwert ausgegeben werden. Mithilfe eines Konfigurationsflags cfg_autoclear_y kann die Recheneinheit automatisch vorsehen, die Aufsummierung der Schleifenberechnung auf 0 zu initialisieren. Dies hat den Vorteil, dass vor dem Start der Berechnung der Speicher nicht gelöscht oder initialisiert werden muss. Weiterhin müssen vorläufige Ergebnisse während einer Wiederaufnahmeberechnung nicht zwischengespeichert werden. Es wird lediglich ein unterschiedlicher Speicherabschnitt zum Speichern des Ergebnisses benötigt, da y die Zeigeradresse speichert.

In dem obigen Pseudocode wird die Initialisierung des Ergebnisses in einer zusätzlichen Schleifenberechnung ausgeführt.

```
if (flag_clr_y)
    for (n=0; n<p9; n++) y[n] = 0.0f;
```

y[0] wird anschließend als Anfangswert für die Aufsummierung von

```
q = p3[j] * e;
```

```
y[0] += q;
```

verwendet, um das Ergebnis der Berechnung des Gaußprozess-Modells bzw. des RBF-Modells zu erhalten.

Somit wird die Initialisierung beim ersten Durchlauf der Schleifenberechnung durchgeführt, wenn das Konfigurationsflag cfg_autoclear_y gesetzt ist. Für diese Initialisierung der Berechnung wird keine zusätzliche Schleifenberechnung in der Berechnungseinheit notwendig, da der Akkumulator mittels dieses Konfigurationsflags mit null initialisiert werden kann.

Bei einer Wiederaufnahme der Schleifenberechnung nach einem zuvor erfolgten Abbruch kann nun die Eingangsnormalisierung ausgelassen werden, um die Berechnung zu beschleunigen. Weiterhin kann der Abbruch der Berechnung nur am Ende der Berechnung der äußeren Schleife zugelassen werden, so dass das Ergebnis der Zwischenberechnung nicht verworfen werden muss.

Des weiteren erlaubt der obige Pseudo-Code durch Konfiguration der Auswahlgröße cfg_pd die Berechnung von partiellen Ableitungen des Gauß-Prozess- oder RBF-Modells mit globalen oder lokalen Längenskalen nach den gewählten Eingangsgrößen.

Insgesamt ermöglicht der obige Hardwareaufbau der Modellberechnungseinheit 22 durch die Konfiguration von Auswahlgrößen, wie z.B. cfg_mlp, cfg_rbf_local, cfg_pd, folgende verschiedene Modellierungen zu unterstützen.

- MLP Modell mit verschiedenen Aktivierungsfunktionen;
- RBF Modell mit globalen Längenskalen;
- RBF Modell mit lokalen Längenskalen;
- Gauß-Prozess Modell, dessen Berechnung der Berechnung des RBF-Modells im wesentlichen entspricht; und
- partielle Ableitungen des RBF Modells mit lokalen oder globalen Längenskalen bzw. des Gauß-Prozess Modells.

**Patentansprüche**

1. Verwendung eines Steuergeräts (2) mit einem Mikroprozessor (21) und einer oder mehreren Modellberechnungseinheiten (22) als ein Steuergerät zur Steuerung eines Motorsystems (1) in einem Kraftfahrzeug, wobei die Modellberechnungseinheit (22) zur wahlweisen Berechnung eines RBF-Modells oder einer Neuronenschicht eines mehrschichtigen Perzeptronenmodells mit einem in Hardware ausgebildeten fest verdrahteten Rechenkern (11, 13, 14) zur Berechnung eines fest vorgegebenen Rechenalgorithmus in gekoppelten Funktionsblöcken ausgebildet ist,

   wobei der Rechenkern (11, 13, 14) ausgebildet ist, um für ein RBF-Modell abhängig von einer oder mehreren Eingangsgrößen eines Eingangsgrößenvektors (ut), von Stützstellenpunkten (V), von Längenskalen (L), von für jeden Stützstellenpunkt vorgegebenen Parametern eine Ausgangsgröße (y) zu berechnen,

wobei der Rechenkern (11, 13, 14) weiterhin ausgebildet ist, um für die Neuronenschicht des mehrschichtigen Perzeptronenmodells mit einer Anzahl von Neuronen (20) abhängig von der einen oder den mehreren Eingangsgrößen des Eingangsgrößenvektors (ut), von einer Gewichtungsmatrix mit Gewichtungsfaktoren ($v_{0...p7-1,0...p6-1}$) und einen für jedes Neuron (20) vorgegebenen Offsetwert eine Ausgangsgröße für jedes Neuron (20) zu berechnen, und

wobei der Rechenkern (11, 13, 14) ausgebildet ist, um die Auswahl der Berechnung des RBF-Modells oder der Neuronenschicht des mehrschichtigen Perzeptronenmodells mithilfe einer Auswahlgröße (cfg_mlp) durchzuführen,

wobei das Steuergerät eingerichtet ist, erfasste Sensorsignale (S) als Eingangsgrößenvektor (ut) bereitzustellen und abhängig von der berechneten Ausgangsgröße (y) das Motorsystem (1) zu steuern.

2. Verwendung des Steuergeräts (2) nach Anspruch 1, wobei zur Berechnung des RBF-Modells in dem Rechenkern (11, 13, 14) die Ausgangsgröße als eine Summe eines für jeden Stützstellenpunkt berechneten Werts gebildet wird, wobei der Wert einem Produkt aus einem dem betreffenden Stützstellenpunkt zugeordneten Parameter und einem Ergebnis einer Exponentialfunktion eines Werts ist, der sich aus dem durch die Längenskalen gewichteten quadratischen Abstand des betreffenden Stützstellenpunkts von dem Eingangsgrößenvektor (ut) ergibt, und/oder wobei zur Berechnung der Neuronenschicht des mehrschichtigen Perzeptronenmodells in dem Rechenkern (11, 13, 14) für jedes Neuron (20) der Neuronenschicht eine Summe der mit einem durch das Neuron und die Eingangsgröße bestimmten Gewichtungsfaktor ($v_{0...p7-1,0...p6-1}$) gewichteten Werte der Eingangsgrößen und dem dem Neuron (20) vorgegebenen Offsetwert ($O_0 ... O_{p6-1}$) berechnet wird und das Ergebnis mit einer Aktivierungsfunktion (act) transformiert wird, um die Ausgangsgröße für das Neuron (20) zu erhalten.

3. Verwendung des Steuergeräts (2) nach Anspruch 1 oder 2, wobei den Stützstellenpunkten (V) und der Gewichtungsmatrix mit Gewichtungsfaktoren ein gemeinsamer Speicherbereich zugewiesen ist.

4. Verwendung des Steuergeräts (2) nach einem der Ansprüche 1 bis 3, wobei den für jeden Stützstellenpunkt (V) vorgegebenen Parametern und den für jedes Neuron (20) vorgegebenen Offsetwerten ($O_0 ... O_{p6-1}$) ein gemeinsamer Speicherbereich zugewiesen ist.

5. Verwendung des Steuergeräts (2) nach einem der Ansprüche 1 bis 4, wobei der Rechenkern (11, 13, 14) ausgebildet ist, um abhängig von einer weiteren Auswahlgröße (cfg_activation_function) eine Art einer Aktivierungsfunktion für das mehrschichtigen Perzeptronenmodell auszuwählen und/oder die Berechnung eines Gaußprozesskerns durchzuführen.

6. Verwendung des Steuergeräts (2) nach Anspruch 5, wobei eine Aktivierungsfunktion (act) eine Knickfunktion, eine Sigmoidfunktion, eine Tangens-Hyberbolicus-Funktion oder eine lineare Funktion umfasst.

7. Verwendung des Steuergeräts (2) nach einem der Ansprüche 1 bis 6, wobei der Rechenkern (11, 13, 14) ausgebildet ist, um abhängig von einer RBF-Auswahlgröße (cfg_rbf_local) die Verwendung von lokalen Längenskalen für die Berechnung des RBF-Modells vorzusehen.

8. Verwendung des Steuergeräts (2) nach einem der Ansprüche 1 bis 7, wobei der Rechenkern (11, 13, 14) ausgebildet ist, um abhängig von einer Gradienten-Auswahlgröße (cfg_pd) die Berechnung von partiellen Ableitungen des RBF-Modells durchzuführen.

9. Verwendung des Steuergeräts (2) nach einem der Ansprüche 1 bis 8, wobei der Rechenkern (11, 13, 14) in einem Flächenbereich eines integrierten Bausteins ausgebildet ist.

10. Verwendung des Steuergeräts (2) nach einem der Ansprüche 1 bis 9, wobei der Rechenkern (11, 13, 14) ausgebildet ist, um die Ausgangsgröße abhängig von einer Konfigurationsgröße während der Schleifenberechnung zur Ermittlung der Summe der Ergebnisse der Additionen für alle Stützstellenpunkte auf einen vorgegebenen Wert zu initialisieren.

11. Verwendung des Steuergeräts (2) nach Anspruch 10, wobei der Rechenkern (11, 13, 14) ausgebildet ist, um mehrere Ausgangsgrößen eines Ausgangsgrößenvektors abhängig von einer Konfigurationsgröße während der Schleifenberechnung zur Ermittlung der Summe der Ergebnisse der Additionen für alle Stützstellenpunkte auf einen vorgegebenen Wert zu initialisieren.

12. Verwendung des Steuergeräts (2) nach einem der Ansprüche 1 bis 11, wobei der Rechenkern (11, 13, 14) eine Zustandsmaschine (11) und einen oder mehrere Rechenoperationsblöcke (13, 14), insbesondere einen MAC-Block und einen Exponentialfunktion-Berechnungsblock, umfasst, und insbesondere einen Speicher (12) zum Speichern der einen oder mehreren Eingangsgrößen des Eingangsgrößenvektors (ut), der Stützstellenpunkte, der Längenskalen (L), der für jeden Stützstellenpunkt vorgegebenen Parameter und der Ausgangsgröße (y) umfasst.

**Claims**

1. Use of a control device (2) comprising a microprocessor (21) and one or more model calculating units (22) as a control device for controlling an engine system (1) in a motor vehicle, wherein the model calculating unit (22) is designed for selectively calculating an RBF model or a neuron layer of a multilayer perceptron model with a hardwired computing core (11, 13, 14) formed in hardware for calculating a fixedly predefined computing algorithm in coupled functional blocks, wherein the computing core (11, 13, 14) is designed to calculate an output variable (y) for an RBF model depending on one or more input variables of an input variable vector (ut), node points (V), length scales (L), and parameters predefined for each node point, wherein the computing core (11, 13, 14) is furthermore designed to calculate, for the neuron layer of the multilayer perceptron model having a number of neurons (20), an output variable for each neuron (20) depending on the one or more input variables of the input variable vector (ut), a weighting matrix having weighting factors ($v_{0...p7-1,0...p6-1}$), and an offset value predefined for each neuron (20), and

   wherein the computing core (11, 13, 14) is designed to carry out the selection of the calculation of the RBF model or the neuron layer of the multilayer perceptron model with the aid of a selection variable (cfg_mlp), wherein the control device is configured to provide detected sensor signals (S) as input variable vector (ut) and to control the engine system (1) depending on the calculated output variable (y).

2. Use of the control device (2) according to Claim 1, wherein for calculating the RBF model in the computing core (11, 13, 14), the output variable is formed as a sum of a value calculated for each node point, wherein the value is equal to a product of a parameter assigned to the relevant node point and a result of an exponential function of a value that results from the quadratic distance - weighted by the length scales - of the relevant node point from the input variable vector (ut), and/or
   wherein for calculating the neuron layer of the multilayer perceptron model in the computing core (11, 13, 14), for each neuron (20) of the neuron layer, a sum of the values of the input variables weighted with a weighting factor ($v_{0...p7-1,0...p6-1}$) - determined by the neuron and the input variable - and the offset value ($O_0 ... O_{p6-1}$) predefined for the neuron (20) is calculated and the result is transformed with an activation function (act) in order to obtain the output variable for the neuron (20).

3. Use of the control device (2) according to Claim 1 or 2, wherein a common memory area is allocated to the node points (V) and the weighting matrix having weighting factors.

4. Use of the control device (2) according to any of Claims 1 to 3, wherein a common memory area is allocated to the parameters predefined for each node point (V) and to the offset values ($O_0 ... O_{p6-1}$) predefined for each neuron (20).

5. Use of the control device (2) according to any of Claims 1 to 4, wherein the computing core (11, 13, 14) is designed, depending on a further selection variable (cfg_activation_function), to select a type of activation function for the multilayer perceptron model and/or to carry out the calculation of a Gaussian process kernel.

6. Use of the control device (2) according to Claim 5, wherein an activation function (act) comprises a kink function, a sigmoid function, a hyperbolic tangent function or a linear function.

7. Use of the control device (2) according to any of Claims 1 to 6, wherein the computing core (11, 13, 14) is designed to provide the use of local length scales for the calculation of the RBF model depending on an RBF selection variable (cfg_rbf_local).

8. Use of the control device (2) according to any of Claims 1 to 7, wherein the computing core (11, 13, 14) is designed to carry out the calculation of partial derivatives of the RBF model depending on a gradient selection variable (cfg_pd).

9. Use of the control device (2) according to any of Claims 1 to 8, wherein the computing core (11, 13, 14) is formed in a surface region of an integrated chip.

**10.** Use of the control device (2) according to any of Claims 1 to 9, wherein the computing core (11, 13, 14) is designed to initialize the output variable to a predefined value depending on a configuration variable during the loop calculation for ascertaining the sum of the results of the additions for all node points.

**11.** Use of the control device (2) according to Claim 10, wherein the computing core (11, 13, 14) is designed to initialize a plurality of output variables of an output variable vector to a predefined value depending on a configuration variable during the loop calculation for ascertaining the sum of the results of the additions for all node points.

**12.** Use of the control device (2) according to any of Claims 1 to 11, wherein the computing core (11, 13, 14) comprises a state machine (11) and one or more computing operation blocks (13, 14), in particular an MAC block and an exponential function calculating block, and in particular comprises a memory (12) for storing the one or more input variables of the input variable vector (ut), the node points, the length scales (L), the parameters predefined for each node point, and the output variable (y).

**Revendications**

**1.** Utilisation d'un appareil de commande (2) pourvu d'un microprocesseur (21) et d'une ou de plusieurs unités de calcul de modèle (22) comme appareil de commande pour commander un système de moteur (1) dans un véhicule automobile,

dans laquelle l'unité de calcul de modèle (22) est réalisée pour le calcul sélectif d'un modèle RBF ou d'une couche de neurones d'un modèle de perceptron multicouche pourvu d'un moteur de calcul câblé (11, 13, 14) réalisé sous forme de matériel pour calculer un algorithme de calcul prédéfini de manière fixe dans des blocs de fonction couplés, dans laquelle le moteur de calcul (11, 13, 14) est réalisé pour calculer une grandeur de sortie (y) pour un modèle RBF en fonction d'une ou de plusieurs grandeurs d'entrée d'un vecteur de grandeurs d'entrée (ut), de points nodaux (V), d'échelles de longueur (L), de paramètres prédéfinis pour chaque point nodal, dans laquelle le moteur de calcul (11, 13, 14) est en outre réalisé pour calculer une grandeur de sortie pour chaque neurone (20) pour la couche de neurones du modèle de perceptron multicouche pourvu d'un certain nombre de neurones (20) en fonction de ladite une ou des plusieurs grandeurs d'entrée du vecteur de grandeurs d'entrée (ut), d'une matrice de pondération avec des facteurs de pondération ($v_{0...p7-1,0...p6-1}$) et d'une valeur de décalage prédéfinie pour chaque neurone (20), et

dans laquelle le moteur de calcul (11, 13, 14) est réalisé pour effectuer la sélection du calcul du modèle RBF ou de la couche de neurones du modèle de perceptron multicouche à l'aide d'une grandeur de sélection (cfg_mlp),

dans laquelle l'appareil de commande est conçu pour fournir des signaux de capteur (S) détectés sous forme de vecteur de grandeurs d'entrée (ut) et pour commander le système de moteur (1) en fonction de la grandeur de sortie (y) calculée.

**2.** Utilisation de l'appareil de commande (2) selon la revendication 1, dans laquelle la grandeur de sortie est formée comme une somme d'une valeur calculée pour chaque point nodal pour le calcul du modèle RBF dans le moteur de calcul (11, 13, 14), dans laquelle la valeur est un produit d'un paramètre attribué au point nodal concerné et d'un résultat d'une fonction exponentielle d'une valeur qui résulte de la distance quadratique, pondérée par les échelles de longueur, du point nodal concerné par rapport au vecteur de grandeurs d'entrée (ut), et/ou dans laquelle pour le calcul de la couche de neurones du modèle de perceptron multicouche dans le moteur de calcul (11, 13, 14), pour chaque neurone (20) de la couche de neurones, une somme des valeurs, pondérées par un facteur de pondération ($v_{0...p7-1,0...p6-1}$) déterminé par le neurone et la grandeur d'entrée, des grandeurs d'entrée et de la valeur de décalage ($O_0 ... O_{p6-1}$) prédéfinie pour le neurone (20) est calculée, et le résultat est transformé par une fonction d'activation (act) afin d'obtenir la grandeur de sortie pour le neurone (20) .

**3.** Utilisation de l'appareil de commande (2) selon la revendication 1 ou 2, dans laquelle une zone de mémoire commune est attribuée aux points nodaux (V) et à la matrice de pondération avec des facteurs de pondération.

**4.** Utilisation de l'appareil de commande (2) selon l'une quelconque des revendications 1 à 3, dans laquelle une zone de mémoire commune est attribuée aux paramètres prédéfinis pour chaque point nodal (V) et aux valeurs de décalage ($O_0 ... O_{p6-1}$) prédéfinies pour chaque neurone (20) .

**5.** Utilisation de l'appareil de commande (2) selon l'une quelconque des revendications 1 à 4, dans laquelle le moteur de calcul (11, 13, 14) est réalisé pour sélectionner en fonction d'une autre grandeur de sélection (cfg_activation_function) un type d'une fonction d'activation pour le modèle de perceptron multicouche et/ou pour effectuer le calcul d'un coeur de processus gaussien.

6. Utilisation de l'appareil de commande (2) selon la revendication 5, dans laquelle une fonction d'activation (act) comprend une fonction de coude, une fonction sigmoïde, une fonction de tangente hyperbolique ou une fonction linéaire.

7. Utilisation de l'appareil de commande (2) selon l'une quelconque des revendications 1 à 6, dans laquelle le moteur de calcul (11, 13, 14) est réalisé pour prévoir l'utilisation d'échelles de longueur locales pour le calcul du modèle RBF en fonction d'une grandeur de sélection RBF (cfg_rbf_local).

8. Utilisation de l'appareil de commande (2) selon l'une quelconque des revendications 1 à 7, dans laquelle le moteur de calcul (11, 13, 14) est réalisé pour effectuer le calcul de dérivations partielles du modèle RBF en fonction d'une grandeur de sélection de gradient (cfg_pd).

9. Utilisation de l'appareil de commande (2) selon l'une quelconque des revendications 1 à 8, dans laquelle le moteur de calcul (11, 13, 14) est réalisé dans une partie de surface d'un module intégré.

10. Utilisation de l'appareil de commande (2) selon l'une quelconque des revendications 1 à 9, dans laquelle le moteur de calcul (11, 13, 14) est réalisé pour initialiser à une valeur prédéfinie la grandeur de sortie en fonction d'une grandeur de configuration pendant le calcul en boucle pour établir la somme des résultats des additions pour tous les points nodaux.

11. Utilisation de l'appareil de commande (2) selon la revendication 10, dans laquelle le moteur de calcul (11, 13, 14) est réalisé pour initialiser à une valeur prédéfinie plusieurs grandeurs de sortie d'un vecteur de grandeurs de sortie en fonction d'une grandeur de configuration pendant le calcul en boucle pour établir la somme des résultats des additions pour tous les points nodaux.

12. Utilisation de l'appareil de commande (2) selon l'une quelconque des revendications 1 à 11, dans laquelle le moteur de calcul (11, 13, 14) comprend une machine d'états (11) et un ou plusieurs blocs d'opération de calcul (13, 14), en particulier un bloc MAC et un bloc de calcul de fonction exponentielle, et en particulier une mémoire (12) pour stocker ladite une ou les plusieurs grandeurs d'entrée du vecteur de grandeurs d'entrée (ut), les points nodaux, les échelles de longueur (L), les paramètres prédéfinis pour chaque point nodal et la grandeur de sortie (y).

**FIG. 1**

**FIG. 2**

# FIG. 3

**S1**             **S2**             **S3**

# FIG. 4

**FIG. 5a**

**FIG. 5b**

**FIG. 5c**

**FIG. 5d**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **TURKSON et al.** Artificial neural network applications in the calibration of spark-ignition engines: An overview. *ENGINEERING SCIENCE AND TECHNOLOGY, AN INTERNATIONAL JOURNAL,* 16. April 2016, vol. 19 (3), 1346-1359

- **EPPLER et al.** High speed neural network chip for trigger purposes in high energy physics. *DESIGN, AUTOMATION AND TEST IN EUROPE, PROCEEDINGS PARIS, FRANCE 23-26 FEB. 1998, LOS ALAMITOS, CA, USA, IEEE COMPUT. SOC, US,* 23. Februar 1998, 108-115